# FASCICULE DE BREVET EUROPEEN

(11) **EP 3 662 567 B1**
(45) Date de publication et mention de la délivrance du brevet: **02.06.2021**
(21) Numéro de dépôt: 18743845.2
(22) Date de dépôt: 31.07.2018
(51) Int. Cl.: H02K 11/25

(54) **MACHINE ELECTRIQUE TOURNANTE MUNIE D'UN ELEMENT DE CALAGE**
ROTIERENDE ELEKTRISCHE MASCHINE MIT EINEM VERKEILUNGSELEMENT
ROTATING ELECTRICAL MACHINE PROVIDED WITH A WEDGING ELEMENT

(30) Priorité: 02.08.2017 FR 1757414
(43) Date de publication de la demande: 10.06.2020
(73) Titulaire: Valeo Equipements Electriques Moteur, 94046 Créteil Cedex (FR)
(72) Inventeur: BOUSSICOT, Frédéric, 94046 Creteil (FR)
(74) Mandataire: Ricard, Amandine
(86) Numéro de dépôt international: PCT/EP2018/070784
(87) Numéro de publication internationale: WO 2019/025462

(56) Documents cités:
- EP-A2- 2 830 179
- WO-A1-2016/207537

## Description

### DOMAINE TECHNIQUE DE L'INVENTION

L'invention se rapporte au domaine général de l'automobile. Elle concerne plus particulièrement une machine électrique tournante de véhicule automobile comportant un capteur, par exemple de température, et un élément de calage du capteur contre un chignon de bobinage de la machine. La machine électrique tournante est par exemple un alternateur, un moteur électrique, ou une machine réversible pouvant fonctionner dans les deux modes.

### ARRIERE PLAN TECHNOLOGIQUE DE L'INVENTION

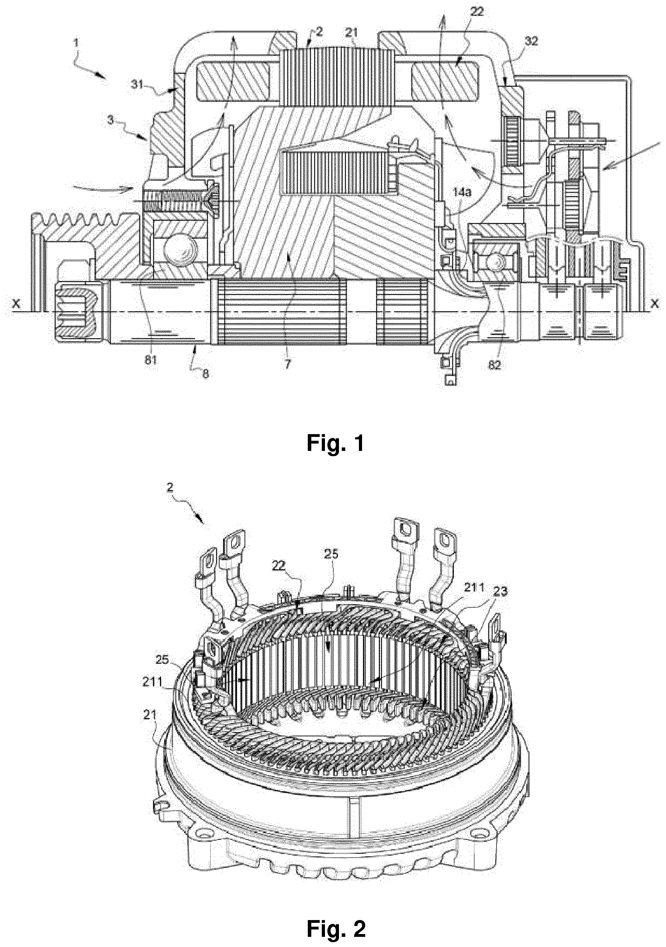

Les machines électriques tournantes 1, dont un exemple est représenté sur la figure 1, comportent un stator 2 et un rotor 7, le rotor 7 étant séparé du stator 2 par un entrefer (non visible). Le rotor 7 est solidaire d'un arbre 8 qui tourne autour d'un axe de rotation X. Par ailleurs, un carter 3 porte le stator 2 et comporte au moins un flasque arrière, appelé palier arrière 31 et un flasque avant, appelé palier avant 32.

Le stator 2, représenté de manière plus distinctive sur la figure 2, comporte un corps 21 de forme annulaire et métallique, par exemple sous la forme d'un paquet de tôles pour diminuer les courants de Foucault. Les tôles (non visibles) présentent chacune une pluralité d'encoches 26 en correspondance les unes avec les autres. En outre, le corps 21 porte un bobinage 22 de stator 4, qui traverse le corps 21 à la faveur des encoches 26 de celui-ci et s'étend en saillie des extrémités 211 du corps 21 pour former une première extrémité et une deuxième extrémité de bobinage 22 appelées chignons 23.

Au cours du fonctionnement de la machine 1, celle-ci s'échauffe, notamment au niveau du bobinage 22 du stator 2 dans lequel circulent des courants de forte densité. Il est donc important de prévoir des moyens de protection en cas de surchauffe afin d'éviter l'endommagement de la machine 1.

Un capteur 4 de température est généralement inséré à l'intérieur de la machine 1, au contact des chignons 23 de bobinage 22, afin de détecter l'état thermique de la machine 1. Le capteur 4 de température est connecté à un circuit de protection thermique configuré pour couper l'alimentation électrique de la machine 1 lors de la détection d'une surchauffe.

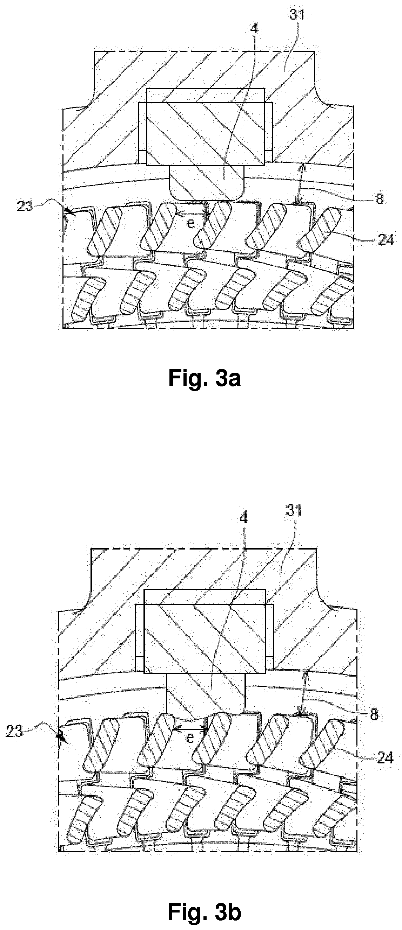

Afin de mesurer précisément et de manière continue la température du bobinage 22, une solution consiste à insérer une lame ressort au contact du capteur 4. La lame ressort permet d'exercer une force ayant une direction sensiblement radiale sur le capteur 4 de manière à plaquer ledit capteur 4 contre le chignon 23. Cependant, la force exercée par la lame ressort sur le capteur 4 ne permet pas d'assurer un contact optimal entre le capteur 4 et le chignon 23. En effet, le chignon 23 est formé d'épingles 24 séparées les unes des autres par des espacements e visibles sur les figures 3a et 3b. Par conséquent, la surface de contact du capteur 4 avec les épingles 24 du chignon 23 est limitée voire inexistante en particulier lorsque le capteur 4 est positionné entre deux épingles 24.

Une autre solution représentée à la figure 3b consiste à positionner le capteur 4 entre le palier arrière 31 et le chignon 23 et d'assurer le plaquage du capteur 4 contre le chignon 23 au moyen d'un support élastique déformable. Le capteur 4 est alors inséré par déformation entre le palier arrière 31 et le chignon 23 ce qui permet d'augmenter la surface de contact entre le capteur 4 et le chignon 23. En effet, le support épouse la forme des épingles 24 de sorte que les échanges thermiques entre le capteur 4 et le chignon 23 sont améliorés. Toutefois, le contact entre le capteur 4 et le chignon 23 reste insuffisant, le support élastique n'épousant pas suffisamment le chignon 23. Le document EP2830179 concerne une machine similaire.

### DESCRIPTION GENERALE DE L'INVENTION

L'invention vise donc à fournir une solution simple et durable permettant d'améliorer le contact entre le capteur et le chignon de bobinage d'une machine électrique tournante.

Ainsi, l'invention concerne une machine électrique tournante comme revendiqué dans la revendication 1.

L'élément de calage, une fois positionné sur une portion supérieure du palier, permet de contrôler la pression exercée par le capteur sur le chignon de bobinage.

En effet, la forme de l'élément de calage et celle du palier sont conçues de manière à coopérer pour que l'élément de calage exerce une pression prédéterminée sur le capteur. Pour ce faire, préalablement à la conception de l'élément de calage et du palier de la machine électrique tournante, la pression à appliquer sur le capteur pour que le capteur soit suffisamment comprimé contre le chignon de bobinage est calculée. Ainsi, une fois positionné sur le palier du carter, l'élément de calage adopte une position lui permettant de comprimer correctement le capteur contre le chignon de bobinage ce qui permet de faciliter le montage du capteur contre le chignon et d'améliorer la précision des mesures.

Par ailleurs, si une sur-pression ou une sous-pression de l'élément de calage sur le capteur est constatée, la forme de l'élément de l'élément de calage ou du palier est modifiée afin d'assurer une compression optimale du capteur contre le chignon de bobinage.

En outre, lorsque le capteur est un capteur de température, l'élément de calage assure la compression en continu du capteur contre le chignon de bobinage de sorte que les échanges thermiques entre le capteur et le chignon sont améliorés. Le temps de réponse du capteur vers le circuit de protection thermique est ainsi réduit de sorte que la détection d'une surchauffe de la machine est plus rapide. Ainsi, l'alimentation électrique de la machine sera coupée plus vite et les composantes de la machine seront préservées plus longtemps.

La machine électrique tournante selon l'invention peut présenter une ou plusieurs caractéristiques parmi les suivantes, considérées individuellement ou selon les combinaisons techniquement possibles.

Selon un mode de réalisation non limitatif, l'élément de calage est positionné dans une cavité ménagée dans la portion supérieure du palier, le fond de ladite cavité formant la seconde pente.

Selon un mode de réalisation non limitatif, un premier orifice traversant est ménagé dans l'élément de calage et un second orifice est ménagé dans le palier, le premier orifice et le second orifice étant construits et agencés pour recevoir un élément de fixation fixant l'élément de calage sur le palier.

Selon un mode de réalisation non limitatif, un insert métallique est positionné dans le premier orifice construit et agencé pour coopérer avec l'élément de fixation.

Selon un mode de réalisation non limitatif, l'élément de calage comporte une première butée construite et agencée pour être au contact d'une seconde butée ménagée dans le palier, le contact de la première butée avec la seconde butée définissant une compression maximale du capteur contre le chignon de bobinage.

Selon un mode de réalisation non limitatif, le capteur est fixé sur un support déformable élastique.

Selon un mode de réalisation non limitatif, le capteur est une sonde de température.

Selon un mode de réalisation non limitatif, un évidement est ménagé dans la portion inférieure de l'élément de calage pour recevoir un élément élastique, ledit élément élastique étant construit et agencé pour exercer un effort sur l'élément de calage afin de maintenir le capteur en compression contre le chignon de bobinage.

Selon un mode de réalisation non limitatif, l'élément élastique est une lame ressort.

L'invention et ses différentes applications seront mieux comprises à la lecture de la description qui suit et à l'examen des figures qui l'accompagnent.

### BREVE DESCRIPTION DES FIGURES

D'autres caractéristiques et avantages de l'invention ressortiront à la lecture de la description qui suit, en référence aux figures annexées données à titre illustratif mais nullement limitatif de l'invention, qui illustrent :
- à la figure 1, une demi vue en coupe axiale d'une machine électrique tournante,
- à la figure 2, une vue en perspective du stator de la figure 1,
- à la figure 3a, un capteur en position contre un chignon de bobinage d'une machine électrique tournante selon l'art antérieur,
- à la figure 3b, un capteur en position contre un chignon de bobinage d'une machine électrique tournante selon l'art antérieur,
- à la figure 4a, une vue en perspective d'une machine électrique tournante selon un premier mode de réalisation de l'invention dans laquelle l'élément de calage est en cours de positionnement sur le palier,
- à la figure 4b, un agrandissement de l'élément de calage et du palier représentés à la figure 4a,
- à la figure 5a, une vue en perspective de la machine électrique tournante présentée à la figure 4a dans laquelle l'élément de calage est positionné sur le palier,
- à la figure 5b, un agrandissement de l'élément de calage et du palier représentés à la figure 5a,
- à la figure 5c, une vue en coupe axiale de l'élément de calage et du palier représentés aux figures 5a et 5b,
- à la figure 6, une vue en perspective de l'élément de calage et du palier de la figure 5b lorsqu'ils sont fixés l'un à l'autre,
- à la figure 7, une vue en coupe axiale de l'élément de calage positionné sur le palier arrière de la machine électrique tournante selon un deuxième mode de réalisation de l'invention,
- à la figure 8, un diagramme en bloc illustrant les étapes d'un procédé de montage de l'élément de calage sur le palier arrière.

### DESCRIPTION DETAILLEE D'AU MOINS UN MODE DE REALISATION DE L'INVENTION

Sauf précision contraire, un même élément apparaissant sur des figures différentes présente une référence unique.

L'invention se rapporte à une machine électrique tournante 1 notamment pour véhicule automobile. La machine électrique tournante 1 selon l'invention peut se présenter sous la forme d'un alternateur, d'un moteur électrique, ou d'une machine réversible pouvant fonctionner dans les deux modes.

La figure 1 illustre de manière schématique la structure générale de la machine électrique tournante 1.

En référence à la figure 1, la machine électrique tournante 1 comporte un stator 2 et un rotor 7 qui est monté sur un arbre 8. L'arbre 8 est monté rotatif autour d'un axe de rotation X par des moyens de paliers 81 et 82, par exemple des roulements à billes. Les moyens de palier 81 et 82 sont supportés par un palier arrière 31 et un palier avant 32 formant un carter 3 de la machine électrique tournante 1.

Le stator 2 comporte un corps 21, porté par le carter 3, sous la forme d'un empilement de tôles minces, monté par exemple par frettage dans le carter 3 de la machine 1. Le corps 21 du stator 2 forme une couronne dont la face intérieure 25 est pourvue d'encoches 26 ouvertes vers l'intérieur recevant le bobinage 22 tel que représenté à la figure 2. Les parties du bobinage 22 qui s'étendent en saillie axiale par rapport à des extrémités 211 du corps 21 de stator 2 sont appelées "chignons 23 de bobinage 22". On note que le palier arrière 31 et le palier avant 32 sont positionnés en regard des chignons 23 de bobinage 22. Par ailleurs, le chignon 23 est formé d'épingles 24, chaque épingle 24 comportant une tête en forme de U et de deux branches reçues dans deux encoches différentes 26.

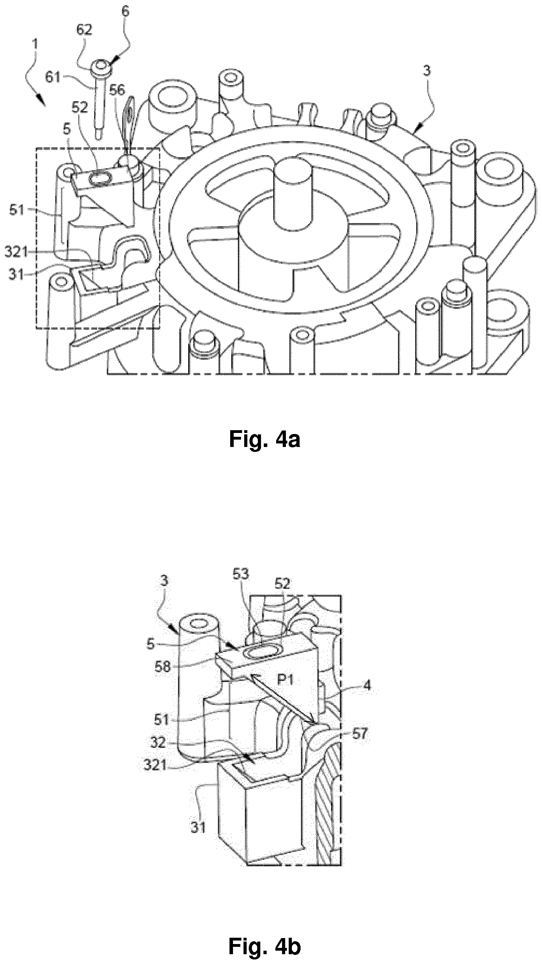

Les figures 4a à 6 représentent la machine électrique tournante 1 selon un premier mode de réalisation.

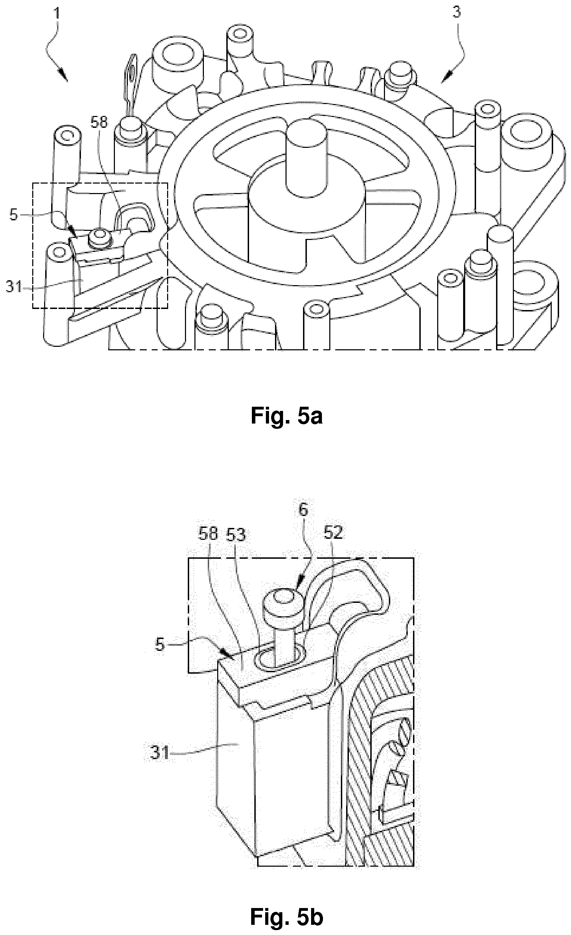

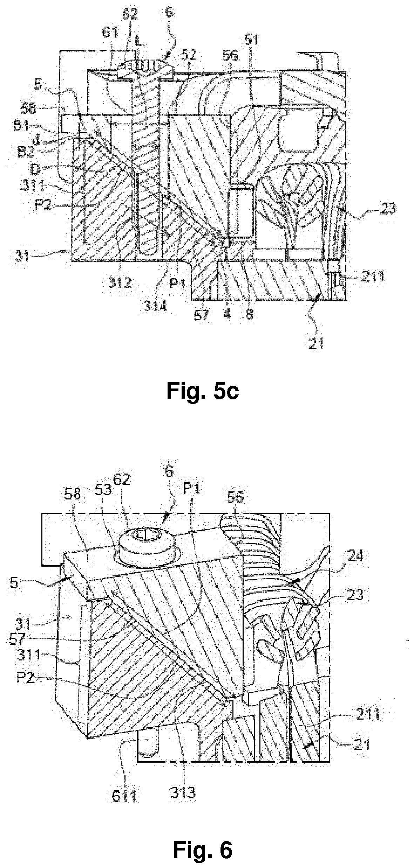

Afin de réaliser des mesures dans la machine 1, en particulier lors de son fonctionnement, un capteur 4, visible sur la figure 5c, est positionné à l'intérieur de la machine 1. Le capteur 4 est logé au niveau d'un jeu 8 délimité par le palier arrière 31 du carter de la machine 1 et un chignon 23 de bobinage 22.

Selon un mode de réalisation, le capteur 4 est un capteur de température. Avantageusement, le capteur de température est connecté à un circuit de protection thermique configuré pour couper l'alimentation électrique de la machine 1 lors de la détection d'une surchauffe.

Par ailleurs, selon un mode de réalisation non limitatif, le capteur 4 est fixé à un support déformable élastique. Le capteur 4 peut ainsi être inséré par déformation au niveau du jeu 8 et prendre appui contre le chignon 23 de bobinage 22. De plus, un tel support permet d'épouser les épingles 24 des chignons 23 de bobinage 22. Le support déformable élastique est par exemple constitué d'une résine thermoconductrice qui assure l'échange thermique entre le chignon 23 et le capteur 4.

Afin d'améliorer le contact entre le capteur 4 et le chignon 23 de bobinage 22, la machine électrique tournante 1 selon l'invention comporte un élément de calage 5 adapté à coopérer avec le palier arrière 31 de la machine 1. L'élément de calage 5 assure la compression du capteur 4 contre le chignon 23 de bobinage 22 de manière continue et optimale. Selon un autre mode de réalisation non représenté, l'élément de calage 5 est adapté à coopérer avec le palier avant 32 pour assurer la compression du capteur 4 contre le chignon 23 de bobinage 22.

Selon le mode de réalisation présenté aux figures 4a et 4b, une portion inférieure 51 de l'élément de calage 5 est biseautée de sorte à former une première pente P1. En d'autres termes, une face inférieure 57 de l'élément de calage 5 est inclinée par rapport à l'horizontale lorsque l'élément de calage 5 est positionné sur le palier arrière 31. Par « horizontale », on entend un plan perpendiculaire à l'axe de rotation X de la machine 1. La première pente P1 est calculée selon une pression prédéterminée assurant une compression optimale du capteur 4 contre le chignon 22 de bobinage 23. Par ailleurs, le palier arrière 31 comporte une portion supérieure 311 formant une seconde pente P2. Dans le mode de réalisation présenté aux figures 4a et 4b, une cavité 32 est ménagée dans la portion supérieure 311 du palier arrière 31 et le fond 321 de la cavité 32 forme la seconde pente P2. Une telle cavité 32 permet le guidage de l'élément de calage 5 lors de son déplacement sur le palier arrière 31. Dans un autre mode de réalisation non représenté, le palier arrière 31 ne comporte pas de cavité 32, une face supérieure 313 du palier arrière 31 présentant alors une inclinaison par rapport par rapport à l'horizontale pour former la seconde pente P2. De la même manière que la première pente P1, la seconde pente P2 est calculée selon une pression prédéterminée assurant une compression optimale du capteur 4 contre le chignon 22 de bobinage 23. La coopération de la première pente P1 avec la seconde pente P2 assure le déplacement par glissage, selon un plan incliné, de l'élément de calage 5 vers le chignon 23 de bobinage 22 de manière à comprimer le capteur 4 entre ledit élément de calage 5 et le chignon 23.

Afin de contrôler la pression exercée par l'élément de calage 5 sur le capteur 4, l'élément de calage 5 comporte, selon un mode de réalisation, une première butée B1 adaptée à coopérer avec une seconde butée B2 ménagée dans le palier arrière 31. La première butée B1 est construite et agencée pour être au contact de la seconde butée B2 ménagée dans le palier arrière 31. Le contact de la première butée B1 avec la seconde butée B2 définit une compression maximale du capteur 4 contre le chignon 23 de bobinage 22. En d'autres termes l'élément de calage 5 est en position finale lorsque la première butée B1 est au contact de la seconde butée B2.

Selon le mode de réalisation visible aux figures 4a à 6, la première butée B1 est formée par un épaulement ménagé dans la portion inférieure 51 de l'élément de calage 5. En d'autres termes, une partie de la face inférieure 57 de l'élément de calage 5 est inclinée pour former la première pente P1 et une autre partie de ladite face inférieure 57 s'étend selon une direction horizontale pour former la première butée B1. Par ailleurs, la seconde butée B2 est formée par un épaulement ménagé dans la portion supérieure 311 du palier arrière 31. En d'autres termes, une partie de la face supérieure 313 de l'élément de calage 5 est inclinée pour former la seconde pente P2 et une autre partie de ladite face supérieure 313 s'étend selon une direction horizontale pour former la seconde butée B2. La distance d séparant la première butée B1 de la seconde butée B2 lorsque l'élément de calage 5 est positionné sur le palier arrière 31 définit la compression du capteur 5. Plus la distance d augmente plus la compression du capteur 4 contre le chignon 23 de bobinage 22 augmente jusqu'à ce que la première butée B1 soit au contact de la seconde butée B2 ce qui correspond à une compression maximale du capteur 4 contre le chignon 23 de bobinage 22. La distance d permet ainsi de calculer la course exacte de l'élément de calage 5.

En outre, selon un mode de réalisation non limitatif, un élément de fixation 6 permet de fixer l'élément de calage 5 sur le palier arrière 31. L'élément de fixation 6 est adapté à coopérer avec un premier orifice 52 ménagé dans l'élément de calage 5 et un second orifice 312 ménagé dans le palier arrière 31.L'élément de fixation 6 se présente par exemple sous la forme d'une vis de fixation comportant une tige 61 et une tête 62.

Le premier orifice 52 est traversant, visible sur les figures 5b et 5c, et est adapté pour recevoir une partie de la tige 61. Plus particulièrement, le premier orifice 52 s'étend entre une face supérieure 58 et une face inférieure 57 de l'élément de calage 5. Comme on peut le voir sur la figure 5c, le premier orifice 52 est un trou oblong dont la largeur L est supérieure au diamètre D de la tige 61 pour permettre à l'élément de calage 5 de se déplacer par rapport au palier arrière 31 sans que le premier orifice 52 ne vienne en butée contre l'élément de fixation 6. Lors du contact entre la première butée B1 et la seconde butée B2, un jeu d'assemblage subsiste entre le premier orifice 52 et l'élément de fixation 6.

Le second orifice 312 visible à la figure 5c est adapté pour recevoir une partie de la tige 61. Le second orifice 312 traverse la face supérieure 313 du palier arrière 31 et peut également traverser une face inférieure 314 du palier arrière 31 comme on peut le voir sur les figures 5c et 6.

Par ailleurs, comme on peut le voir sur la figure 6, la tête 62 de l'élément de fixation 6 est destinée à venir en butée contre la face supérieure 58 de l'élément de calage 5 lorsque l'élément de calage 5 est fixé sur le palier arrière 31. En outre, selon un mode de réalisation non limitatif, un insert métallique 53 est positionné dans le premier orifice 52. Dans ce cas, la tête 62 de l'élément de fixation 6 vient en butée contre une extrémité supérieure de l'insert métallique 53 lorsque l'élément de calage 5 est fixé sur le palier arrière 31. La mise en place de l'insert métallique 53 permet de limiter le marquage de l'élément de calage 5 par l'élément de fixation 6 et ainsi d'augmenter la durée de vie de l'élément de calage 5. L'insert métallique 53 permet également de ne pas avoir d'effets de fluage de l'élément de calage 5 lors de chocs thermiques.

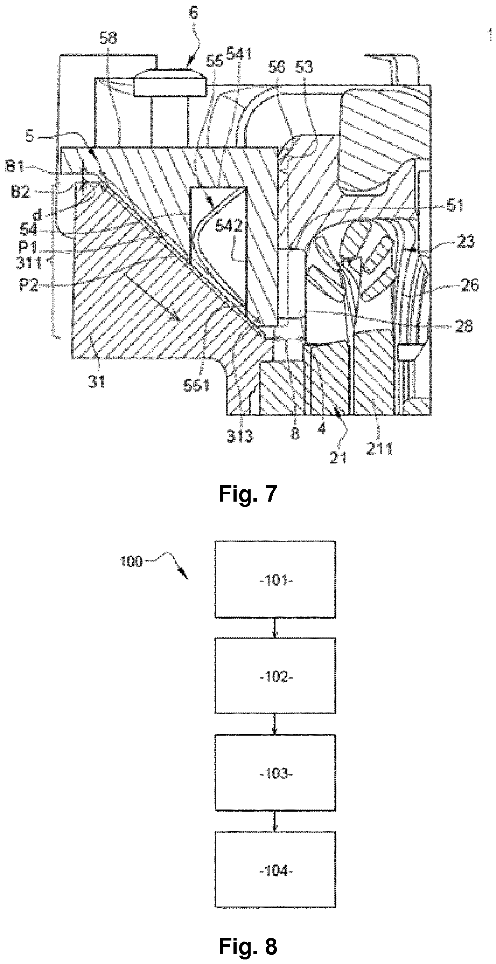

La figure 7 représente partiellement la machine électrique tournante 1 selon un deuxième mode de réalisation de l'invention.

La machine électrique tournante 1 selon le second mode de réalisation présente globalement les mêmes caractéristiques que la machine électrique tournante 1 selon le premier mode de réalisation de l'invention. Par ailleurs, à la différence de la machine 1 selon le premier mode de réalisation, un évidement 54 est ménagé dans la portion inférieure 51 de l'élément de calage 5 dans lequel est positionné un élément élastique 55. L'élément élastique 55 est construit et agencé pour exercer un effort sur l'élément de calage 5 afin de maintenir le capteur 4 en compression contre le chignon 23 de bobinage 22 malgré le vieillissement des pièces dans le temps. Selon le mode de réalisation présenté à la figure 7, l'élément élastique 55 est une lame ressort, celle-ci étant insérée comprimée dans l'évidement 54 entre une face supérieure 541 de l'évidement 54 et la face supérieure 313 du palier arrière 31 (ou le fond 321 de la cavité 32). Dans le mode de réalisation de la figure 7, une première extrémité 551 et une seconde extrémité 552 de la lame ressort sont au contact d'une face interne 542 de l'évidement 54 pour exercer un effort sur l'élément de calage 5 qui est orienté vers le capteur 4.

La figure 8 représente les étapes d'un procédé de montage 100 de l'élément de calage 5 sur le palier arrière 31 selon un mode de réalisation de l'invention.

Dans une étape préliminaire 101, l'élément élastique 55 est positionné dans l'évidement 54 de l'élément de calage 5. On note que dans le premier mode de réalisation, l'étape préliminaire 101 n'est pas réalisée.

Dans une première étape 102, l'élément de calage 5 est positionné sur une portion supérieure 311 du palier 31 de sorte que la première pente P1 soit au contact de la seconde pente P2. L'élément de calage 5 glisse alors sur la portion supérieure 311 du palier 31 jusqu'à ce qu'une face interne 56 de l'élément de calage 5 soit au contact du capteur 4. La compression du capteur 4 entre l'élément de calage 5 et le chignon 23 de bobinage 22 est faible.

Dans une deuxième étape 103, l'élément de calage 5 est déplacé (dans le sens de la flèche représentée sur la figure 5c) vers le capteur 4 de sorte que la compression du capteur 4 entre l'élément de calage 5 et le chignon 23 augmente. Cela permet d'exercer une force orientée vers le capteur 4 qui est alors d'avantage plaqué contre le chignon 23. Lorsque le capteur 4 est fixé sur un support déformable élastiquement, le déplacement de l'élément de calage 5 vers le capteur 4 augmente la déformation du capteur de manière à augmenter la surface de contact entre le capteur 4 et le chignon 23. On note, en outre, que plus l'élément de calage 5 est déplacé vers le capteur 4 plus la distance d diminue. Lorsque la compression du capteur 4 atteint une valeur maximale, la première butée B1 est en contact avec la seconde butée B2, la distance d étant alors nulle. Il n'est alors plus possible de comprimer d'avantage le capteur 4 contre le chignon 23.

Dans une troisième étape 104, la tige 61 de l'élément de fixation 6 est positionnée successivement dans le premier orifice 52 puis dans le second orifice 312 jusqu'à ce que la tête 62 vienne en butée contre la face supérieure 58 de l'élément de calage 5. Un écrou (non représenté) peut alors être vissé au niveau d'une extrémité libre 611 de la tige 61 jusqu'à venir en butée contre la face inférieure 314 du palier arrière 31. La position de l'élément de calage 5 par rapport au palier arrière 31 est ainsi la compression du capteur 4 sont fixes.

## Revendications

1. Machine électrique tournante (1), notamment pour véhicule automobile, comportant :
- un corps (21) de stator (2),
- un bobinage (22) de stator (2) porté par le corps (21) de stator (2),
- un chignon (23) de bobinage (22) s'étendant en saillie par rapport à une extrémité (211) du corps (21) du stator (2),
- un carter (3), portant le corps (21) de stator (2), comportant un palier
- (31) positionné en regard du chignon (23) de bobinage (22) du stator (2),
- un capteur (4),
- un élément de calage (5) positionné sur une portion supérieure (311) du palier (31), ledit élément de calage (5) étant construit et agencé pour comprimer le capteur (4) contre le chignon (23) de bobinage (22), et **caractérisée en ce que** la portion supérieure (311) du palier (31) forme une seconde pente (P2) construite et agencée pour coopérer avec une première pente (P1) formée par le biseautage d'une portion inférieure (51) de l'élément de calage (5), la coopération de la seconde pente (P2) et de la première pente (P1) assurant le déplacement de l'élément de calage (5) vers le capteur (4) pour comprimer ledit capteur (4) contre le chignon (23) de bobinage (22).

2. Machine électrique tournante (1) selon la revendication 1, **caractérisée en ce que** l'élément de calage (5) est positionné dans une cavité (32) ménagée dans la portion supérieure (311) du palier (31), le fond (321) de ladite cavité (32) formant la seconde pente (P2).

3. Machine électrique tournante (1) selon l'une des revendications précédentes, **caractérisée en ce que** :
- un premier orifice (52) traversant est ménagé dans l'élément de calage (5),
- un second orifice (312) est ménagé dans le palier (31),
le premier orifice (52) et le second orifice (312) étant construits et agencés pour recevoir un élément de fixation (6) fixant l'élément de calage (5) sur le palier (31).

4. Machine électrique tournante (1) selon la revendication précédente, **caractérisée en ce qu'**un insert métallique (53) est positionné dans le premier orifice (52) construit et agencé pour coopérer avec l'élément de fixation (6).

5. Machine électrique tournante (1) selon l'une des revendications précédentes, **caractérisée en ce que** l'élément de calage (5) comporte une première butée (B1) construite et agencée pour être au contact d'une seconde butée (B2) ménagée dans le palier (31), le contact de la première butée (B1) avec la seconde butée (B2) définissant une compression maximale du capteur (4) contre le chignon (23) de bobinage (22).

6. Machine électrique tournante (1) selon l'une des revendications précédentes, **caractérisée en ce que** le capteur (4) est fixé sur un support déformable élastique.

7. Machine électrique tournante (1) selon l'une des revendications précédentes, **caractérisée en ce que** le capteur (4) est une sonde de température.

8. Machine électrique tournante (1) selon l'une des revendications précédentes, **caractérisée en ce qu'**un évidement (54) est ménagé dans la portion inférieure (51) de l'élément de calage (5), un élément élastique (55) étant reçu dans cet évidement, ledit élément élastique (55) étant construit et agencé pour exercer un effort sur l'élément de calage (5) afin de maintenir le capteur (4) en compression contre le chignon (23) de bobinage (22).

9. Machine électrique tournante (1) selon la revendication précédente, **caractérisée en ce que** l'élément élastique (55) est une lame ressort.

## Patentansprüche

1. Rotierende elektrische Maschine (1), insbesondere für ein Kraftfahrzeug, die aufweist:
- einen Körper (21) eines Stators (2),
- eine Bewicklung (22) eines Stators (2), die vom Körper (21) des Stators (2) getragen wird,
- einen Wickelkopf (23) der Bewicklung (22), der sich bezüglich eines Endes (211) des Körpers (21) des Stators (2) vorstehend erstreckt,
- ein Gehäuse (3), das den Körper (21) des Stators (2) trägt, das ein Lager (31) aufweist, das gegenüber dem Wickelkopf (23) der Bewicklung (22) des Stators (2) positioniert ist,
- einen Sensor (4),
- ein Verkeilelement (5), das auf einem oberen Abschnitt (311) des Lagers (31) positioniert ist, wobei das Verkeilelement (5) konstruiert und eingerichtet ist, den Sensor (4) gegen den Wickelkopf (23) der Bewicklung (22) zu pressen,
und **dadurch gekennzeichnet, dass** der obere Abschnitt (311) des Lagers (31) eine zweite Neigung (P2) formt, die konstruiert und eingerichtet ist, um mit einer ersten Neigung (P1) zusammenzuwirken, die durch das Abschrägen eines unteren Abschnitts (51) des Verkeilelements (5) geformt wird, wobei die Zusammenwirkung der zweiten Neigung (P2) und der ersten Neigung (P1) die Verschiebung des Verkeilelements (5) zum Sensor (4) gewährleistet, um den Sensor (4) gegen den Wickelkopf (23) der Bewicklung (22) zu pressen.

2. Rotierende elektrische Maschine (1) nach Anspruch 1, **dadurch gekennzeichnet, dass** das Verkeilelement (5) in einem Hohlraum (32) positioniert ist, der im oberen Abschnitt (311) des Lagers (31) vorgesehen ist, wobei der Boden (321) des Hohlraums (32) die zweite Neigung (P2) formt.

3. Rotierende elektrische Maschine (1) nach einem der vorhergehenden Ansprüche, **dadurch gekennzeichnet, dass**:
- eine erste Durchgangsöffnung (52) im Verkeilelement (5) vorgesehen ist,
- eine zweite Öffnung (312) im Lager (31) vorgesehen ist,
wobei die erste Öffnung (52) und die zweite Öffnung (312) konstruiert und eingerichtet sind, um ein Befestigungselement (6) aufzunehmen, das das Verkeilelement (5) auf dem Lager (31) befestigt.

4. Rotierende elektrische Maschine (1) nach dem vorhergehenden Anspruch, **dadurch gekennzeichnet, dass** ein metallischer Einsatz (53) in der ersten Öffnung (52) positioniert ist, der konstruiert und eingerichtet ist, um mit dem Befestigungselement (6) zusammenzuwirken.

5. Rotierende elektrische Maschine (1) nach einem der vorhergehenden Ansprüche, **dadurch gekennzeichnet, dass** das Verkeilelement (5) einen ersten Anschlag (B1) aufweist, der konstruiert und eingerichtet ist, um mit einem zweiten Anschlag (B2) in Kontakt zu sein, der im Lager (31) vorgesehen ist, wobei der Kontakt des ersten Anschlags (B1) mit dem zweiten Anschlag (B2) ein maximales Pressen des Sensors (4) gegen den Wickelkopf (23) der Bewicklung (22) definiert.

6. Rotierende elektrische Maschine (1) nach einem der vorhergehenden Ansprüche, **dadurch gekennzeichnet, dass** der Sensor (4) auf einem elastischen verformbaren Träger befestigt ist.

7. Rotierende elektrische Maschine (1) nach einem der vorhergehenden Ansprüche, **dadurch gekennzeichnet, dass** der Sensor (4) ein Temperaturfühler ist.

8. Rotierende elektrische Maschine (1) nach einem der vorhergehenden Ansprüche, **dadurch gekennzeichnet, dass** eine Aushöhlung (54) im unteren Abschnitt (51) des Verkeilelements (5) vorgesehen ist, wobei ein elastisches Element (55) in dieser Aushöhlung aufgenommen wird, wobei das elastische Element (55) konstruiert und eingerichtet ist, um eine Kraft auf das Verkeilelement (5) auszuüben, um den Sensor (4) gegen den Wickelkopf (23) der Bewicklung (22) gepresst zu halten.

9. Rotierende elektrische Maschine (1) nach dem vorhergehenden Anspruch, **dadurch gekennzeichnet, dass** das elastische Element (55) eine Blattfeder ist.

## Claims

1. Rotating electrical machine (1), notably for a motor vehicle, comprising:
- a body (21) of a stator (2),
- a winding (22) of a stator (2) borne by the body (21) of the stator (2),
- a lead-out wire (23) of the winding (22) projecting from an end (211) of the body (21) of the stator (2),
- a casing (3), bearing the body (21) of the stator (2), comprising a bearing (31) positioned facing the lead-out wire (23) of the winding (22) of the stator (2),
- a sensor (4),
- a wedging element (5) positioned on an upper portion (311) of the bearing (31), said wedging element (5) being constructed and arranged to compress the sensor (4) against the lead-out wire (23) of the winding (22),
and **characterized in that** the upper portion (311) of the bearing (31) forms a second slope (P2) constructed and arranged to cooperate with a first slope (P1) formed by the bevelling of a lower portion (51) of the wedging element (5), the cooperation of the second slope (P2) and of the first slope (P1) ensuring the displacement of the wedging element (5) towards the sensor (4) to compress said sensor (4) against the lead-out wire (23) of the winding (22).

2. Rotating electrical machine (1) according to Claim 1, **characterized in that** the wedging element (5) is positioned in a cavity (32) formed in the upper portion (311) of the bearing (31), the bottom (321) of said cavity (32) forming the second slope (P2) .

3. Rotating electrical machine (1) according to one of the preceding claims, **characterized in that**:
- a first through orifice (52) is formed in the wedging element (5),
- a second orifice (312) is formed in the bearing (31),
the first orifice (52) and the second orifice (312) being constructed and arranged to receive a fixing element (6) fixing the wedging element (5) onto the bearing (31).

4. Rotating electrical machine (1) according to the preceding claim, **characterized in that** a metal insert (53) is positioned in the first orifice (52) constructed and arranged to cooperate with the fixing element (6).

5. Rotating electrical machine (1) according to one of the preceding claims, **characterized in that** the wedging element (5) comprises a first abutment (B1) constructed and arranged to be in contact with a second abutment (B2) formed in the bearing (31), the contact of the first abutment (B1) with the second abutment (B2) defining a maximum compression of the sensor (4) against the lead-out wire (23) of the winding (22).

6. Rotating electrical machine (1) according to one of the preceding claims, **characterized in that** the sensor (4) is fixed onto an elastic deformable support.

7. Rotating electrical machine (1) according to one of the preceding claims, **characterized in that** the sensor (4) is a temperature probe.

8. Rotating electrical machine (1) according to one of the preceding claims, **characterized in that** a recess (54) is formed in the lower portion (51) of the wedging element (5), an elastic element (55) being received in this recess, said elastic element (55) being constructed and arranged to exert an effort on the wedging element (5) in order to keep the sensor (4) compressed against the lead-out wire (23) of the winding (22).

9. Rotating electrical machine (1) according to the preceding claim, **characterized in that** the elastic element (55) is a leaf spring.
